# EUROPEAN PATENT SPECIFICATION

(11) **EP 4 010 102 B1**
(45) Date of publication and mention of the grant of the patent: **09.08.2023**
(21) Application number: 20757405.4
(22) Date of filing: 28.07.2020
(51) Int. Cl.: B01D 29/21, B01D 29/96, B01D 35/30, B01D 46/24

(54) **FILTRATION ASSEMBLY COMPRISING A FILTERING CARTRIDGE AND AN AUXILIARY DEVICE**
FILTRATIONSANORDUNG MIT FILTERKARTUSCHE UND HILFSVORRICHTUNG
AGENCEMENT DE FILTRATION AVEC UNE CARTOUCHE DE FILTRATION ET UN DISPOSITIF D'AIDE

(30) Priority: 07.08.2019 IT 201900014280
(43) Date of publication of application: 15.06.2022
(73) Proprietor: Ufi Filters s.p.a., 46047 Porto Mantovano (Mantova) (IT)
(72) Inventor: GIRONDI, Giorgio, 46047 Porto Mantovano, Mantova (IT)
(74) Representative: Gamba, Alessandro
(86) International application number: PCT/IB2020/057113
(87) International publication number: WO 2021/024091

(56) References cited:
- WO-A1-2004/091750
- WO-A1-2008/030707
- WO-A1-2010/123344
- WO-A1-2019/142122
- US-A- 5 045 192
- US-A1- 2005 123 346

## Description

### Field of application

The present invention relates to a filtration assembly of a vehicle.

The present invention finds preferred application in the automotive field. Specifically, in fact, the present invention is placed in the context of systems for filtering a fluid with particular reference to the liquid or gaseous fluids required for the operation of a motor vehicle. In other words, the fluid filtration assembly and its components according the present invention have application in air circuits, oil circuits, fuel circuits and/or water (or aqueous solution) circuits, and ventilation circuits for blow-by gases comprised in a vehicle.

Fluid filtration assemblies in automotive applications are well known in the art.

The known filtration assemblies comprise one (or more) filtering cartridges integrally connected to one or more auxiliary devices. In the present discussion, the term "auxiliary device" means any component (or group of components) belonging to the filtration assembly which is suitable to be operatively connectable to the filtering cartridge to perform the specific operations for which it is intended. For example, the auxiliary device is a sensor group and/or a cap group housed at least partially in the filtration chamber of the filtration assembly in which the cartridge is housed.

A problem which is particularly felt in the known filtration assemblies is that of operatively connecting said filtering cartridges and said auxiliary devices in a safe manner, for example so as to avoid any mutual disconnection, but simply replicable, for example to allow simple maintenance operations.

In the known solutions, in fact, designers must choose for one of the two needs, sacrificing the other. An example of said solutions is disclosed in document WO2019/142122A1 in the name of the present applicant.

### Solution of the invention

Therefore, it is object of the present invention to provide a filtration assembly, which ensures the safe blocking of the filtering cartridge with the respective auxiliary device, having safe, simple, and intuitive engagement and disengagement operations.

This object is achieved by the filtration assembly claimed in claim 1. The claims dependent thereon show preferred embodiments involving further advantageous aspects.

### Description of the drawings

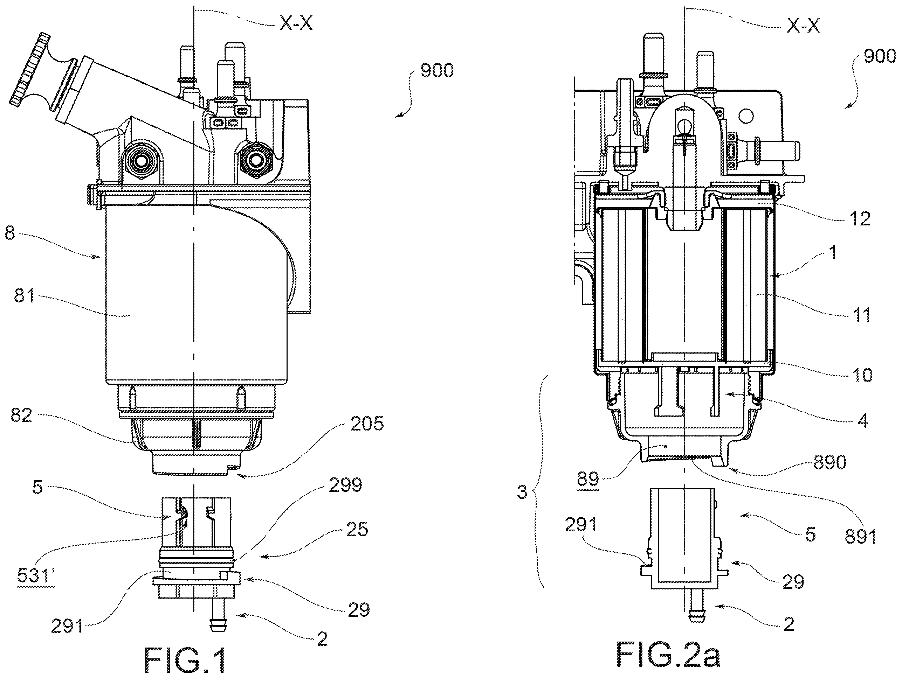

Further features and advantages of the invention will become apparent from the following description of preferred embodiments thereof, given by way of nonlimiting example, with reference to the accompanying drawings, in which
- figure 1 shows a side view of the filtration assembly in accordance with the present invention in a configuration in which the respective auxiliary device is disengaged from the filtering cartridge;

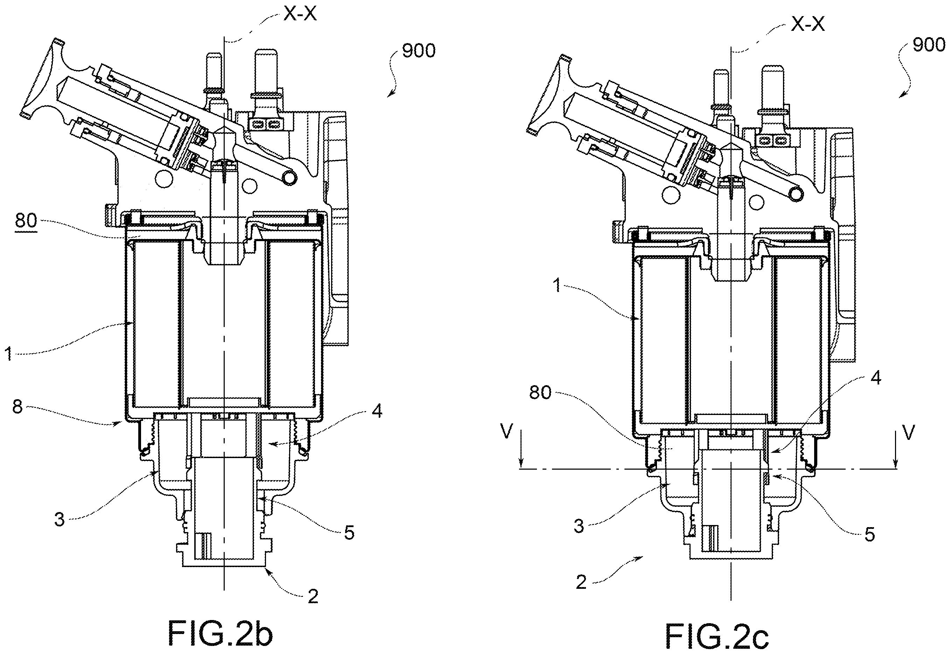

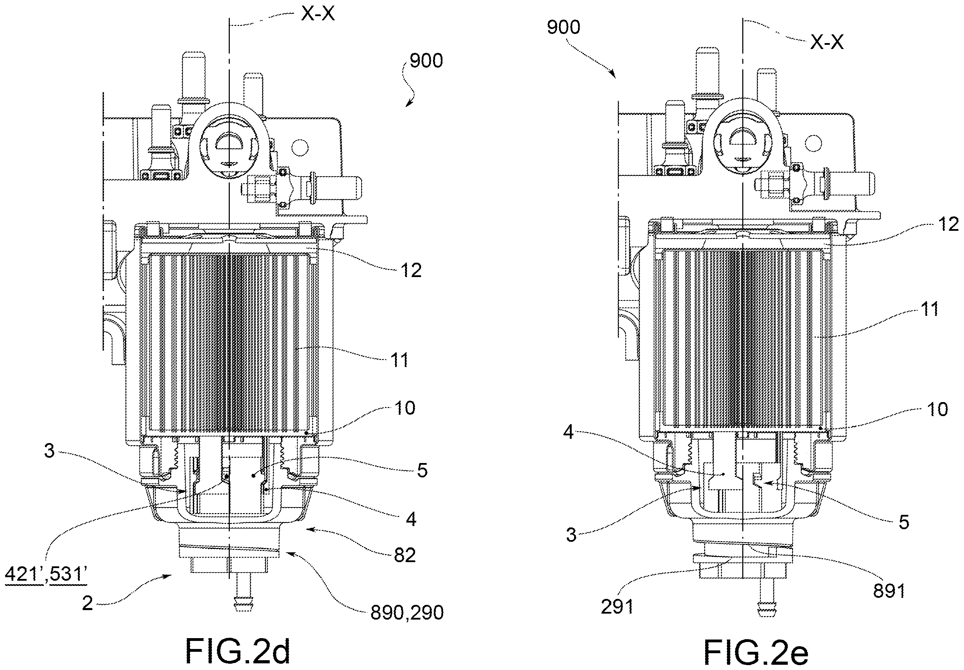

- figures 2a, 2b, 2c, 2d and 2e show the filtration assembly in section in respective engagement and disengagement phases between a filtering cartridge and an auxiliary device, in particular they show a disengagement configuration, an axial insertion configuration, an engagement configuration according to a first section plane, an engagement configuration according to a further section plane, a rotary disengagement configuration;

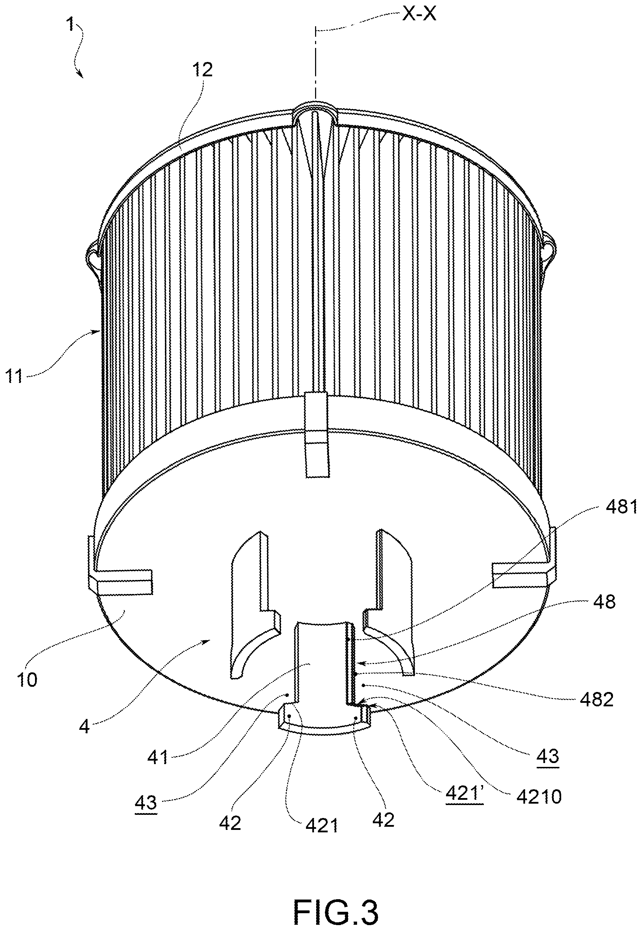

- figure 3 shows a perspective view of a filtering cartridge, according to a preferred embodiment, comprised in a filtration assembly in accordance with the present invention;

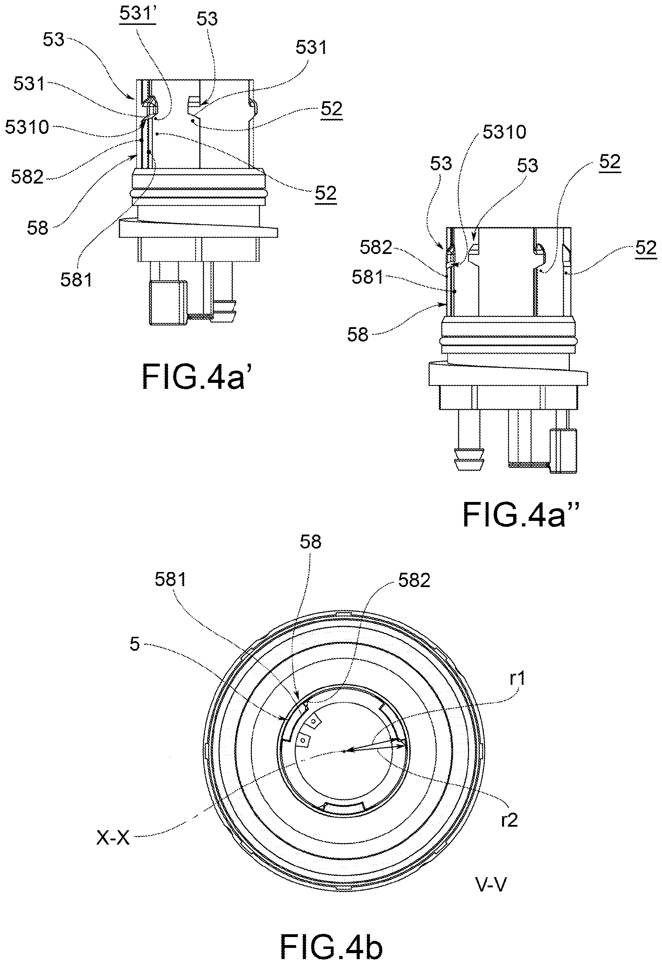

- figures 4a' and 4a" are two side views of an auxiliary device, according to a preferred embodiment, comprised in a filtration assembly in accordance with the present invention;
- figure 4b shows a section view along the section plane V-V of figure 2c.

### Detailed description

In the accompanying drawings, reference numeral 900 indicates a filtration assembly in accordance with the present invention as a whole. The axis X-X shows the extension direction along which and about which said filtration assembly 1 and the related components extend.

Furthermore, numeral 1 indicates a filtering cartridge and numeral 2 indicates an auxiliary device.

Preferably, the filtering cartridge 1 and the auxiliary device 2 in turn extend along and about the axis X-X.

According to the purpose of the present invention, the filtering cartridge 1 and the auxiliary device 2 are specifically suitable to mutually engage and disengage.

In particular, the filtration assembly 900 further comprises engagement/disengagement means 3 comprising cartridge members 4 comprised in the filtering cartridge 1 and device members 5 comprised in the auxiliary device 2.

The cartridge members 4 and the device members 5 are specifically conformed to be configurable in an engagement configuration, by means of a reciprocal axial action along the axis X-X, and in a disengagement configuration, by means of a reciprocal action of rotation about the axis X-X, respectively.

In other words, the engagement/disengagement means 3 are not mutually engageable by means of operations other than a movement in the axial direction. Furthermore, the engagement/disengagement means 3 are not mutually disengageable by means of operations other than a movement in the rotational direction.

In the present description, the engagement/disengagement operations are exclusively intended as those operations which involve the mutual engagement between the cartridge members 4 and device members 2 or which involve the mutual disengagement between the cartridge members 4 and device members 2. In some preferred embodiments, these operations require, upstream or downstream, further approaching or moving away operations (in the axial direction and/or in the rotary direction) required for the complete execution of the engagement/disengagement operations.

In accordance with a preferred embodiment, the filtration assembly 1 also comprises objectification elements required to determine the mutual angular position of the respective cartridge members 4 and device members 5 and ensure the correct execution of the mutual engagement or disengagement steps in the axial direction. Preferably, said objectification elements are housed on the various components involved in the aforementioned operations, for example the filtering cartridge 1 and/or the auxiliary device 2 and/or the optional filter body 8 described below.

According to a preferred embodiment, the filtering cartridge 1 comprises an end plate 10, at least one filtering septum 11, preferably of the hollow cylindrical type, which is traversable by the fluid radially, and a secondary end plate 12.

According to the present invention, the cartridge members 4 are positioned, preferably comprised, in said end plate 10.

Preferably, the cartridge members 4 extend substantially parallel to and about the axis X-X.

Specifically, in fact, the cartridge members 4 comprise at least two blocking groups 40 angularly spaced apart, preferably equally spaced apart.

Preferably, the cartridge members 4 comprise three or four blocking groups 40 angularly spaced apart, preferably equally spaced apart.

In accordance with a preferred embodiment, said blocking groups 40 lie on an imaginary plane that extends radially spaced apart from the axis X-X. In other words, the blocking groups 40 are substantially planar and arched.

In accordance with a preferred embodiment, the blocking groups 40 are angularly equidistant from the axis X-X.

According to a preferred embodiment, the blocking groups 40 are all positioned at the same distance from the axis X-X.

According to a variant, each blocking group 40 has a respective distance from the axis X-X.

In accordance with the present invention, each blocking group 40 comprises a stem 41 and at least one tooth 42.

The tooth 42 is positioned at the axial end of the stem 41 projecting therefrom in a lateral direction, that is, in a circumferential or tangential direction, defining an engagement undercut 43 with the stem 41.

In other words, the stem 41 and tooth 42 give the blocking group 40, which lies on the respective imaginary plane, a substantially "L" shape.

In other embodiments, a blocking group 40 comprises two teeth 42 at the axial end of the stem 41.

In other words, the stem 41 and teeth 42 give the blocking group 40, which lies on the respective imaginary plane, a substantially "T" shape.

The device members 5 are positioned and shaped complementarily to the cartridge members 4.

Preferably, in fact, the device members 5 comprise at least one housing region 52 and a lug 53.

In accordance with the present invention, in the engagement configuration, the tooth 42 is housed in a snap-fit manner in the respective housing region 52 specially shaped.

In accordance with the present invention, in the engagement configuration, the lug 53 is housed in the undercut 43.

In accordance with the present invention, the approach of the filtering cartridge 1 and the auxiliary device 2 in the axial direction results in the mutual engagement of the tooth 42 on the lug 53. This engagement results in the elastic flexing of the blocking group 40 in a radial direction and therefore in the axial snap-fit insertion of the cartridge members 4 into the device members 5.

In accordance with a preferred embodiment, the housing region 52 also houses the stem 41 of the respective blocking group 40.

Preferably, the housing region 52 houses at least the respective tooth 42, but in some preferred embodiments, the housing region 52 houses the entire blocking group 40, that is, both the tooth 42 and the stem 41.

Furthermore, in accordance with the present invention, the cartridge members 4 and the device members 5 comprise a cartridge edge 48 and a device edge 58.

In particular, the cartridge edge 48 and the device edge 58 extend substantially along the axis X-X.

Preferably, the cartridge edge 48 is the outer, lateral edge of the blocking group 40. Preferably, said cartridge edge 48 extends along the stem 41 and/or along the tooth 42.

Preferably, the device edge 58 laterally delimits the housing region 52 facing it.

Preferably, said device edge 58 extends laterally, defining the housing region 52, and/or extends along the lug 53.

In other words, the device edge 58 is located on one of the two sides of the housing region 52.

In accordance with the present invention, the cartridge edge 48 and the device edge 58 are suitable to mutually engage in the rotary disengagement action.

In fact, at least one of cartridge edge 48 and device edge 58 is specifically shaped, thus identifying a ramp. Preferably, the remaining edge is therefore suitable to slide (during the rotary disengagement operations) on said ramp. In particular, the remaining edge is thus suitable to slide (during the rotary disengagement operations) on said ramp, causing the elastic flexing of the blocking group 40 in a radial direction, freeing each tooth 42 from the related housing region 52.

In fact, in accordance with the present invention, the shaped edge that identifies the ramp comprises a first edge, radially proximal to the axis X-X, and a second edge, radially distal from the axis X-X.

According to the present invention, in the mutual engagement between the cartridge edge 48 and the device edge 58, the respective blocking group 40 elastically flexes in a radial direction so that the tooth 42 leaves the respective housing region 52. In other words, due to the shaped edge, it is possible to extract the blocking group 40 fixed in a snap-fit manner to the device members 5. In other words, due to the presence of the shaped edge, the cartridge members 4 and the device members 5 are mutually disengageable. For example, by means of the edge, the auxiliary device 2 is disassemblable from the filtering cartridge 1.

In other words, the shaped edge that identifies the ramp comprises a first edge and a second edge having different radial distance from the axis X-X. Where the first edge is radially spaced apart from the axis X-X by a first radial distance r1, while the second edge is radially spaced apart from the axis X-X by a second radial distance r2. The value of said second radial distance r2 is greater than the value of said first distance r1.

In accordance with a variant, both the cartridge edge 48 and the device edge 58 are complementarily shaped, each identifying a ramp comprising a first edge, radially proximal to the axis X-X, and a second edge, radially distal from the axis X-X.

According to a preferred embodiment, at least one of the cartridge edge 48 and the device edge 58 is shaped thus identifying the ramp, while the other one has a substantially arched or in square shape to allow it to slide on the ramp.

In the accompanying figures, the cartridge edge 48 comprises a first cartridge edge 481 and a second cartridge edge 482.

In the accompanying figures, the device edge 58 comprises a first device edge 581 and a second device edge 582.

In a preferred embodiment, the cartridge edge 48 is positioned on the stem 41.

In a preferred embodiment, the cartridge edge 48 is positioned on the tooth 42.

In a variant, the cartridge edge 48 is positioned on both the stem 41 and the tooth 42.

In a preferred embodiment, the device edge 58 is positioned on the lug 53.

In a preferred embodiment, the device edge 58 is positioned on the sidewall delimiting the housing region 52. In a variant, the device edge 58 is positioned on both the lug 53 and the sidewall delimiting the housing region 52.

In accordance with these preferred embodiments, each edge is positioned to extend linearly on the respective component. According to some embodiments, the edge extends over a single component having a substantially rectilinear course. According to other embodiments, the edge extends over a plurality of components having a segmented course.

In still other words, each edge may fully extend only on the blocking group or on the housing region or, alternatively, extend on both the blocking group and the housing region 52, but in different axial portions along the axis X-X.

In accordance with a preferred embodiment, each tooth 42 comprises a tilted cartridge edge 421 so as to have a tapered shape in the lateral direction.

Preferably, said tilted cartridge edge 421 faces the undercut 43.

According to a preferred embodiment, each lug 53 comprises a tilted protruding edge 531 specifically shaped similarly to the tilted cartridge edge 421.

Preferably, said tilted protruding edge 531 faces the housing region 52.

According to a preferred embodiment, the tilted cartridge edge 421 and the tilted protruding edge 531 comprise a cartridge engagement wall 4210 and a lug engagement wall 5310, respectively, which are preferably adjacent on an imaginary plane parallel to or at most inclined with respect to an imaginary plane orthogonal to the axis X-X, so as to prevent the tooth 42 from slipping on the lug 53 in an axial pulling action.

In other words, in a configuration with the cartridge members 4 and the device members 5 engaged, the cartridge engagement wall 4210 and the lug engagement wall 5310 are such as to discharge any axial pulling actions onto each other.

In accordance with a preferred embodiment, the cartridge engagement wall 4210 and the lug engagement wall 5310 are orthogonal to the axis X-X.

In accordance with a further preferred embodiment, the cartridge engagement wall 4210 and the lug engagement wall 5310 are inclined with respect to the axis X-X, thus identifying a cartridge retention undercut 421' and a lug retention undercut 531' suitable to house a portion of the lug 53 and of the tooth 52, respectively. In other words, in an engagement configuration, the tooth 42 and the lug 53 are shaped to interpenetrate each other, creating a snap-fit coupling between the cartridge and the non-removable auxiliary device through an axial pulling action in the opposite direction to that with which the engagement is obtained. In accordance with the present invention, only the described mutual engagement between the cartridge edges and the device edges allow the release of the coupling and the decoupling between said components.

In accordance with a preferred embodiment, the filtration assembly 900 further comprises a filter body 8 comprising a filtration chamber 80. Preferably, the filtering cartridge 1 is housable in said filtration chamber 80 to perform said filtration operations.

Preferably, as mentioned, the auxiliary device 2 is for example a sensor group, and/or a cap group, being engageable with the filtering cartridge 1 to perform the specific operations for which it is intended.

In accordance with a preferred embodiment, the auxiliary device 2 is a sensor group suitable to detect the presence of water (for example water separated from the fuel in diesel-type fuel filtration operations) collected inside the filtration assembly 1.

In accordance with a preferred embodiment, the auxiliary device 2 is a cap group suitable to allow the drainage of the filtration assembly 1; preferably, it is a cap group suitable to allow the drainage of the water (for example the water separated from the fuel in diesel-type fuel filtration operations) collected inside the filtration assembly 1.

In accordance with a preferred embodiment, the auxiliary device 2 is a heater group.

In accordance with a preferred embodiment, the auxiliary device 2 is a pressure and/or temperature detection group.

According to a preferred embodiment, the auxiliary device 2 is a control unit comprising specific control valve means, for example, a bleed valve, a bypass valve, or a thermostatic valve.

According to some preferred embodiments, the auxiliary device 2 comprises a plurality of the aforementioned types of features, for example being both a cap group and a sensor group and/or a heater group, and/or a detection and/or control group.

According to a preferred embodiment, the auxiliary device 2 is also engageable with the filter body 8.

In accordance with a preferred embodiment, the filter body 8 comprises a through opening 89 in which the auxiliary device 2 is housed.

Preferably, said through opening 89 is positioned along the axis X-X. Preferably, said through opening 89 is concentric to the axis X-X.

In accordance with a preferred embodiment, the auxiliary device 2 sealingly engages the filter body 8. Preferably, the filtration chamber 20 is delimited in the mutual engagement between the auxiliary device 2 and the filter body 8.

Preferably, in the mutual engagement of the engagement/disengagement means 3 provided between the auxiliary device 2 and the filtering cartridge 1, the auxiliary device 2 sealingly engages the filter body 8.

According to a preferred embodiment, the through opening 89 is delimited by an opening ring 890 and the auxiliary device 2 is positionable in the through opening 89 comprising an auxiliary collar 29 suitable to engage the opening ring 890.

According to a preferred embodiment, the auxiliary device comprises a preferably radial, annular gasket 299 suitable to engage the opening ring 890.

According to a preferred embodiment, the opening ring 890 and the auxiliary collar 29 have an annular extension.

In accordance with a preferred embodiment, the opening ring 890 and the auxiliary collar 29 comprise, over the length of said annular extension, engagement steps 891, 291 inclined with respect to a plane orthogonal to the axis X-X, respectively. Preferably, the disengagement between said steps imposes the rotation direction of the disengagement. Preferably, said steps are specially shaped to slide over one another and allow a rotational disengagement between the auxiliary device 2 and the filter body 8.

In accordance with a preferred embodiment, said disengagement between the auxiliary device 2 and the filter body 8 also simultaneously results in the release (disengagement) between the cartridge members 4 and the device members 5.

According to a preferred embodiment, said steps extend circumferentially for a section that is sufficient for the disengagement on the ramp between the cartridge members 4 and device members 5.

In accordance with a preferred embodiment, the filter body 8 consists of two half-shells 81, 82 mutually screwable together.

Preferably, the auxiliary device 2 is operatively connected, according to the above-described modes, to one of the two half-shells. Preferably, the through opening 89 is obtained in a half-shell 82.

In a preferred embodiment, the mutual unscrewing of the two half-shells is such as to results in the mutual disengagement between the cartridge members 4 and the device members 5.

In accordance with a preferred embodiment, the housing region 52 is formed on the auxiliary device 2 facing radially outwards, i.e., radially facing away from the axis X-X, i.e., in which the cartridge members 4 are outside the device members 5.

In other words, in accordance with a preferred embodiment, the cartridge members 4 surround the device members 5.

In accordance with a variant, the housing region 52 is formed on the auxiliary device 2 facing radially inwards, i.e., facing the axis X-X, i.e., in which the cartridge members 4 are inside the device members 5.

In other words, according to a further preferred embodiment, the cartridge members 4 are surrounded by the device members 5.

Innovatively, the fluid filtration assembly of a vehicle described above largely fulfills the purpose of the present invention, overcoming the typical problems of the background art.

Advantageously, in fact, the engagement operations between the filtering cartridge and the auxiliary device involve a single step of mutual axial insertion.

Advantageously, in fact, the disengagement operations between the filtering cartridge and the auxiliary device involve a single step of mutual rotation.

Advantageously, in the engagement and disengagement operations of the two components, the operations are substantially guided and therefore errorproof.

Advantageously, the engagement and disengagement operations of the filtering cartridgefilter body are highly simplified, intuitive, and guided.

Advantageously, in the engagement configuration, the engagement/disengagement means ensure the fixed and safe axial positioning of the two components, as well as maintained over time.

Advantageously, the axial blocking action achieved by the lateral portions of the respective teeth is performed in an effective and reliable manner.

Advantageously, the axial blocking action due to the tilted edges is discharged onto the complementary components provided on the filter body, in an effective manner.

Advantageously, the geometry of the coupling system is simplified, thus simplifying the dimensioning of the teeth and the respective seats, and advantageously minimizing the complexity of the molds used for the production of the engagement/disengagement means and the related costs.

Therefore, a further advantage of the present invention is that the installation of filtering cartridges not provided with blocking groups such as those described on filter bodies is not allowed. In other words, it is not possible to use, for example, traditional cartridges in the filtration group, thus ensuring, for example during maintenance operations, that filtering cartridges of manufacturer-assured quality are used.

Advantageously, the engagement/disengagement means have a small axial footprint, allowing a maximization of the filtering surface of the filtering septum, thus meeting the needs of the specific filtration group.

Advantageously, the described engagement/disengagement means are easily implementable on filtering cartridges of different sizes and diameters.

Advantageously, the described engagement/disengagement means are easily implementable on end plates of different shapes, allowing the implementation of the coupling system on both cylindrical cartridges and cartridges having a main extension direction, for example with rectangular or elliptical end plates, and on irregularly shaped cartridges.

Advantageously, the engagement means have a small radial footprint and are providable on both filtering cartridges affected by radial flow and filtering cartridges affected by axial flow.

Advantageously, the auxiliary device directly engages the filtering cartridge.

Advantageously, the engagement between the filtering cartridge and the auxiliary device allows the elimination of any additional fixing systems provided on the auxiliary device, thus simplifying the shape and reducing the production cost thereof.

Advantageously, the engagement between the filtering cartridge and the auxiliary device can be used for filtering devices in which the axis is vertically oriented, horizontally oriented or inclined with respect to the ground, under use conditions thereof.

Advantageously, the auxiliary device is housable and suitable to form part of the filter body. Advantageously, the mutual engagement between the auxiliary device and the filter body makes the engagement between the auxiliary device and the filtering cartridge more solid. Advantageously, the mutual engagement between the auxiliary device and the filter body makes the auxiliary device an integral part, as well as an "active" component of the filter body, for example by operating as a sensor or as a drain plug for the filtration chamber.

It is apparent that those skilled in the art, in order to meet contingent needs, may make changes to the filtering cartridge, the filter body, the fluid filtering group or the assembly method, all included within the scope of protection as defined by the following claims.

### List of reference symbols:

1 filtering cartridge
10 end plate
11 filtering septum
12 secondary end plate
2 auxiliary device
29 auxiliary collar
291 engagement step
299 annular gasket
3 engagement/disengagement means
4 cartridge members
40 blocking group
41 stem
42 tooth
421 tilted cartridge edge
421' cartridge retention undercut
4210 cartridge engagement wall
43 undercut
48 cartridge edge
481 first cartridge edge
482 second cartridge edge
5 device members
52 housing region
53 lug
531 tilted protruding edge
531' cartridge retention undercut
5310 cartridge engagement wall
58 device edge
581 first device edge
582 second device edge
8 filter body
80 filtration chamber
81 first half-shell
82 second half-shell
89 through opening
890 opening ring
891 opening step
900 filtration assembly
X-X main axis
r1 first radial distance
r2 second radial distance

## Claims

1. Filtration assembly (900) of a fluid of a vehicle which extends along an axis (X-X) and comprises:
i) a filtering cartridge (1);
ii) an auxiliary device (2);
ii) engagement/disengagement means (3) comprising cartridge members (4) comprised in the filtering cartridge (1) and device members (5) comprised in the auxiliary device (2), respectively specially shaped to be configurable in an engagement configuration by means of a reciprocal axial action along the axis (X-X) and in a disengagement configuration by means of a reciprocal action of rotation about the axis (X-X);
wherein the filtering cartridge (1) comprises at an axial end an end plate (10) on which said cartridge members (4) are positioned extending substantially parallel and about the axis (X-X);
wherein the cartridge members (4) comprise at least two blocking groups (40), each comprising a stem (41) and at least one tooth (42) positioned at the axial end of the stem (41) projecting therefrom in a lateral direction, that is, in a circumferential or tangential direction, defining with the stem (41) an engagement undercut (43);
wherein the device members (5) comprise at least one housing region (52) and a lug (53);
wherein, in the engagement configuration, the tooth (42) is housed in a snap-fit manner in the respective housing region (52) specially shaped, and the lug (53) is housed in the undercut (43);
wherein the cartridge members (4) and the device members (5) comprise a cartridge edge (48) and a device edge (58), which extends substantially along the axis (X-X), suitable to engage with each other in the rotary disengagement action, wherein at least one of the cartridge edge (48) and the device edge (58) is shaped, identifying a ramp comprising a first edge radially proximal to the axis (X-X) and a second edge radially distal from the axis (X-X);
wherein the filtration assembly (900) is **characterized by** the fact that in the mutual engagement between the cartridge edge (48) and the device edge (58) the respective blocking group (40) flexes elastically in a radial direction in such a way that the tooth (42) leaves the respective housing region (52).

2. Filtration assembly (900) according to claim 1, wherein both the cartridge edge (48) and the device edge (58) are complementarily shaped, each identifying a ramp comprising a first edge radially proximal to the axis (X-X) and a second edge radially distal from the axis (X-X).

3. Filtration assembly (900) according to any one of the preceding claims, wherein the cartridge edge (48) is positioned on the stem (41) and/or on the tooth (42) while the device edge (58) is positioned on the lug (53) and/or on a side wall delimiting the housing region (52).

4. Filtration assembly (900) according to any one of the preceding claims, wherein each tooth (42) comprises a tilted cartridge edge (421) in such a way as to have a tapered shape in a lateral direction, wherein said tilted cartridge edge (421) faces the undercut (43), wherein each lug (53) comprises a tilted protruding edge (531) specially shaped.

5. Filtration assembly (900) according to claim 4, wherein the tilted cartridge edge (421) and the tilted protruding edge (531) comprise respectively a cartridge engagement wall (4210) and a lug engagement wall (5310) preferably lying on an imaginary plane parallel to or at the most inclined with respect to an imaginary plane orthogonal to the axis (X-X) in such a way as to prevent the tooth (42) from slipping on the lug (53) in an axial pulling action.

6. Filtration assembly (900) according to any one of the preceding claims, wherein the cartridge members (4), and consequently the device engagement members (5), lie on an imaginary plane that extends radially spaced with respect to the axis (X-X).

7. Filtration assembly (900) according to any one of the preceding claims, wherein the cartridge members (4) comprise two, three or four blocking groups (40) angularly equidistant.

8. Filtration assembly (900) according to any one of the preceding claims, wherein each blocking group (40) comprises on the stem (41) two teeth (42) which extend from the stem (41) in two opposite lateral directions, wherein the device members (5) are specially shaped to house both said teeth (42).

9. Filtration assembly (900) according to any one of the preceding claims, further comprising a filter body (8) comprising a filtration chamber (80), wherein the filtering cartridge (1) is housable in said filtration chamber (80).

10. Filtration assembly (900) according to any one of the preceding claims, wherein the auxiliary device (2) is for example a cap group and/or a sensor group and/or a heater group, and/or a detection and/or control group, which is engageable with the filtering cartridge (1) to perform the specific operations for which it is intended.

11. Filtration assembly (900) according to claims 9 and 10, wherein the auxiliary device (2) is also engagable with the filter body (8).

12. Filtration assembly (900) according to claim 11, wherein the filter body (8) comprises, along the axis (X-X), a through opening (89) delimited by an opening ring (890) and the auxiliary device (2) is positionable in the through opening (89) comprising an auxiliary collar (29) suitable to engage the opening ring (890), wherein the auxiliary device (2) sealingly engages the filter body (8) .

13. Filtration assembly (900) according to claim 12, wherein the opening ring (890) and the auxiliary collar (29) comprise engagement steps (891, 291) respectively inclined with respect to the axis (X-X), wherein the disengagement between said steps imposes the direction of rotation of the disengagement.

14. Filtration assembly (900) according to any one of claims 10 to 13, wherein said housing region (52) is formed on the auxiliary device (2) facing radially outwards, i.e. radially facing away from the axis (X-X), i.e. wherein the cartridge members (4) are external to the device members (5), or vice versa the housing region (52) is formed on the auxiliary device (2) facing radially inwards, i.e. facing the axis (X-X), i.e. wherein the cartridge members (4) are internal to the device members (5).

15. Filtration assembly (900) according to any one of the preceding claims, wherein the filtering cartridge (1) comprises:
- the end plate (10);
- at least one filtering septum (11), preferably of the hollow cylindrical type which is traversable by the fluid radially;
- a secondary end plate (12);
wherein the end plate (10) and the secondary end plate (12) are at the axial ends of the filtering septum (11).

## Patentansprüche

1. Filtrationsanordnung (900) eines Fluids bzw. einer Flüssigkeit eines Fahrzeugs, die sich entlang einer Achse (X-X) erstreckt und umfasst:
i) eine Filterpatrone (1);
ii) ein Hilfsvorrichtung (2);
ii) Eingriffs-/Lösemittel (3), umfassend Patronenglieder (4), die in der Filterpatrone (1) enthalten sind, und Vorrichtungsglieder (5), die in der Hilfsvorrichtung (2) enthalten sind, die jeweils speziell geformt sind, um in einer Eingriffskonfiguration mittels einer reziproken axialen Aktion entlang der Achse (X-X) und in einer Lösekonfiguration mittels einer reziproken Rotationsaktion um die Achse (X-X) konfigurierbar zu sein;
wobei die Filterpatrone (1) an einem axialen Ende eine Endplatte (10) umfasst, auf der die Patronenglieder (4) positioniert sind, die sich im Wesentlichen parallel und um die Achse (X-X) erstrecken;
wobei die Patronenglieder (4) zumindest zwei Blockiergruppen (40) umfassen, die jeweils einen Schaft (41) und zumindest einen Zahn (42) umfassen, der an dem axialen Ende des Schafts (41) positioniert ist, wobei er davon in seitlicher Richtung vorsteht, das heißt, in einer Umfangs- oder Tangentialrichtung, wobei er mit dem Schaft (41) eine Eingriffshinterschneidung (43) definiert;
wobei die Vorrichtungsglieder (5) zumindest einen Gehäusebereich (52) und einen Ansatz (53) umfassen;
wobei in der Eingriffskonfiguration der Zahn (42) in Schnapppassung in dem jeweils speziell geformten Gehäusebereich (52) untergebracht ist und der Ansatz (53) in der Hinterschneidung (43) untergebracht ist;
wobei die Patronenglieder (4) und die Vorrichtungsglieder (5) einen Patronenrand (48) und einen Vorrichtungsrand (58) umfassen, der sich im Wesentlichen entlang der Achse (X-X) erstreckt, geeignet, bei der Rotationslöseaktion miteinander in Eingriff zu kommen, wobei zumindest einer des Patronenrands (48) und des Vorrichtungsrands (58) so geformt ist, dass er eine Rampe identifiziert, die einen ersten Rand radial proximal zu der Achse (X-X) und einen zweiten Rand radial distal von der Achse (X-X) umfasst;
wobei die Filtrationsanordnung (900) **dadurch gekennzeichnet ist, dass** sich beim gegenseitigen Eingriff zwischen dem Patronenrand (48) und dem Vorrichtungsrand (58) die jeweilige Blockiergruppe (40) in einer radialen Richtung derart elastisch biegt, dass der Zahn (42) den jeweiligen Gehäusebereich (52) verlässt.

2. Filtrationsanordnung (900) nach Anspruch 1, wobei sowohl der Patronenrand (48) als auch der Vorrichtungsrand (58) komplementär geformt sind, wobei sie jeweils eine Rampe identifizieren, die einen ersten Rand radial proximal zu der Achse (X-X) und einen zweiten Rand radial distal von der Achse (X-X) umfasst.

3. Filtrationsanordnung (900) nach einem der vorhergehenden Ansprüche, wobei der Patronenrand (48) an dem Schaft (41) und/oder an dem Zahn (42) positioniert ist, während der Vorrichtungsrand (58) an dem Ansatz (53) und/oder an einer Seitenwand positioniert ist, die den Gehäusebereich (52) begrenzt.

4. Filtrationsanordnung (900) nach einem der vorhergehenden Ansprüche, wobei jeder Zahn (42) eine geneigte Patronenkante (421) derart aufweist, dass er eine verjüngte Form in einer lateralen Richtung aufweist, wobei die geneigte Patronenkante (421) der Hinterschneidung (43) zugewandt ist, wobei jeder Ansatz (53) einen speziell geformten geneigten vorstehenden Rand (531) umfasst.

5. Filtrationsanordnung (900) nach Anspruch 4, wobei der geneigte Patronenrand (421) und der geneigte vorstehende Rand (531) jeweils eine Patroneneingriffswand (4210) und eine Naseneingriffswand (5310) umfassen, die vorzugsweise auf einer imaginären Ebene parallel oder höchstens geneigt bezüglich einer imaginären Ebene orthogonal zu der Achse (X-X) derart liegen, dass sie verhindern, dass der Zahn (42) bei einer axialen Zugaktion auf dem Ansatz (53) verrutscht.

6. Filtrationsanordnung (900) nach einem der vorhergehenden Ansprüche, wobei die Patronenglieder (4) und folglich die Vorrichtungseingriffsglieder (5) auf einer imaginären Ebene liegen, die sich radial beabstandet bezüglich der Achse (X-X) erstreckt.

7. Filtrationsanordnung (900) nach einem der vorhergehenden Ansprüche, wobei die Patronenglieder (4) zwei, drei oder vier Blockiergruppen (40) im gleichen Winkelabstand umfassen.

8. Filtrationsanordnung (900) nach einem der vorhergehenden Ansprüche, wobei jede Blockiergruppe (40) an dem Schaft (41) zwei Zähne (42) umfasst, die sich von dem Schaft (41) in zwei entgegengesetzte laterale Richtungen erstrecken, wobei die Vorrichtungsglieder (5) speziell geformt sind, um beide Zähne (42) aufzunehmen.

9. Filtrationsanordnung (900) nach einem der vorhergehenden Ansprüche, ferner umfassend einen Filterkörper (8), der eine Filtrationskammer (80) umfasst, wobei die Filterpatrone (1) in der Filterkammer (80) aufnehmbar ist.

10. Filtrationsanordnung (900) nach einem der vorhergehenden Ansprüche, wobei die Hilfsvorrichtung (2) beispielsweise eine Kappengruppe und/oder eine Sensorgruppe und/oder eine Heizergruppe und/oder eine Erfassungs- und/oder Steuer- bzw. Regelgruppe ist, die mit der Filterpatrone (1) in Eingriff bringbar ist, um die spezifischen Operationen auszuführen, für die sie bestimmt ist.

11. Filtrationsanordnung (900) nach den Ansprüchen 9 und 10, wobei die Hilfsvorrichtung (2) auch mit dem Filterkörper (8) in Eingriff bringbar ist.

12. Filtrationsanordnung (900) nach Anspruch 11, wobei der Filterkörper (8) entlang der Achse (X-X) eine Durchgangsöffnung (89) umfasst, die durch einen Öffnungsring (890) begrenzt ist, und die Hilfsvorrichtung (2) in der Durchgangsöffnung (89) positionierbar ist, umfassend einen Hilfskragen (29), der zum Eingriff mit dem Öffnungsring (890) geeignet ist, wobei die Hilfsvorrichtung (2) dichtend in den Filterkörper (8) eingreift.

13. Filtrationsanordnung (900) nach Anspruch 12, wobei der Öffnungsring (890) und der Hilfskragen (29) Eingriffsstufen (891, 291) umfassen, die jeweils bezüglich der Achse (X-X) geneigt sind, wobei das Lösen zwischen diesen Stufen die Rotationsrichtung des Lösens auferlegt bzw. festlegt.

14. Filtrationsanordnung (900) nach einem der Ansprüche 10 bis 13, wobei der Gehäusebereich (52) an der Hilfsvorrichtung (2) radial nach außen gewandt, d. h. radial von der Achse (X-X) abgewandt ausgebildet ist, d. h. wobei sich die Patronenglieder (4) außerhalb der Vorrichtungsglieder (5) befinden, oder umgekehrt der Gehäusebereich (52) an der Hilfsvorrichtung (2) radial nach innen gewandt, d. h. der Achse (X-X) zugewandt ausgebildet ist, d. h. wobei sich die Patronenglieder (4) innerhalb der Patronenglieder (5) befinden.

15. Filtrationsanordnung (900) nach einem der vorhergehenden Ansprüche, wobei die Filterpatrone (1) umfasst:
- die Endplatte (10);
- zumindest ein Filterseptum (11), vorzugsweise von hohlzylindrischen Typ, das von der Flüssigkeit radial durchströmt werden kann;
- eine sekundäre Endplatte (12);
wobei sich die Endplatte (10) und die sekundäre Endplatte (12) an den axialen Enden des Filterseptums (11) befinden.

## Revendications

1. Ensemble de filtration (900) d'un fluide d'un véhicule qui s'étend le long d'un axe (X-X) et comprend :
i) une cartouche de filtration (1) ;
ii) un dispositif auxiliaire (2) ;
ii) des moyens de mise en prise/dégagement (3) comprenant des éléments de cartouche (4) compris dans la cartouche de filtration (1) et des éléments de dispositif (5) compris dans le dispositif auxiliaire (2), spécialement façonnés respectivement pour être configurables dans une configuration de mise en prise au moyen d'une action axiale réciproque le long de l'axe (X-X), et dans une configuration de dégagement au moyen d'une action réciproque de rotation autour de l'axe (X-X) ;
dans lequel la cartouche de filtration (1) comprend sur une extrémité axiale une plaque d'extrémité (10) sur laquelle lesdits éléments de cartouche (4) sont positionnés pour s'étendre sensiblement parallèlement à l'axe (X-X) et autour de celui-ci ;
dans lequel les éléments de cartouche (4) comprennent au moins deux groupes de blocage (40), comprenant chacun une tige (41) et au moins une dent (42) positionnée sur l'extrémité axiale de la tige (41) faisant saillie à partir de celle-ci dans une direction latérale, c'est-à-dire dans une direction circonférentielle ou tangentielle, définissant avec la tige (41) une contre-dépouille (43) de mise en prise ;
dans lequel les éléments de dispositif (5) comprennent au moins une région de logement (52) et une patte (53) ;
dans lequel, dans la configuration de mise en prise, la dent (42) est logée de manière à s'encliqueter dans la région de logement (52) respective spécialement façonnée, et la patte (53) est logée dans la contre-dépouille (43) ;
dans lequel les éléments de cartouche (4) et les éléments de dispositif (5) comprennent un bord de cartouche (48) et un bord de dispositif (58) qui s'étendent sensiblement le long de l'axe (X-X), appropriés pour venir en prise l'un avec l'autre dans l'action de dégagement rotative, dans lequel au moins un parmi le bord de cartouche (48) et le bord de dispositif (58) est façonné, identifiant une rampe comprenant un premier bord radialement proximal à l'axe (X-X) et un deuxième bord radialement distal de l'axe (X-X) ;
dans lequel l'ensemble de filtration (900) est **caractérisé par le fait que** dans la mise en prise mutuelle entre le bord de cartouche (48) et le bord de dispositif (58), le groupe de blocage (40) respectif fléchit de manière élastique dans une direction radiale de telle sorte que la dent (42) quitte la région de logement (52) respective.

2. Ensemble de filtration (900) selon la revendication 1, dans lequel le bord de cartouche (48) et le bord de dispositif (58) sont tous deux façonnés de manière complémentaire, chacun identifiant une rampe comprenant un premier bord radialement proximal à l'axe (X-X) et un deuxième bord radialement distal de l'axe (X-X).

3. Ensemble de filtration (900) selon l'une quelconque des revendications précédentes, dans lequel le bord de cartouche (48) est positionné sur la tige (41) et/ou sur la dent (42) tandis que le bord de dispositif (58) est positionné sur la patte (53) et/ou sur une paroi latérale délimitant la région de logement (52).

4. Ensemble de filtration (900) selon l'une quelconque des revendications précédentes, dans lequel chaque dent (42) comprend un bord de cartouche penché (421) de manière à avoir une forme effilée dans une direction latérale, dans lequel ledit bord de cartouche penché (421) fait face à la contre-dépouille (43), dans lequel chaque patte (53) comprend un bord saillant penché (531) spécialement façonné.

5. Ensemble de filtration (900) selon la revendication 4, dans lequel le bord de cartouche penché (421) et le bord saillant penché (531) comprennent respectivement une paroi de mise en prise de cartouche (4210) et une paroi de mise en prise de patte (5310), de préférence reposant sur un plan imaginaire parallèle, ou au plus inclinées par rapport à un plan imaginaire orthogonal à l'axe (X-X) de manière à empêcher la dent (42) de glisser sur la patte (53) dans une action de traction axiale.

6. Ensemble de filtration (900) selon l'une quelconque des revendications précédentes, dans lequel les éléments de cartouche (4), et en conséquence les éléments de dispositif (5) de mise en prise, reposent sur un plan imaginaire qui s'étend radialement et qui est espacé par rapport à l'axe (X-X).

7. Ensemble de filtration (900) selon l'une quelconque des revendications précédentes, dans lequel les éléments de cartouche (4) comprennent deux, trois ou quatre groupes de blocage (40) angulairement équidistants.

8. Ensemble de filtration (900) selon l'une quelconque des revendications précédentes, dans lequel chaque groupe de blocage (40) comprend sur la tige (41) deux dents (42) qui s'étendent à partir de la tige (41) dans deux directions latérales opposées, dans lequel les éléments de dispositif (5) sont spécialement façonnés pour loger chacune desdites dents (42).

9. Ensemble de filtration (900) selon l'une quelconque des revendications précédentes, comprenant en outre un corps de filtre (8) comprenant une chambre de filtration (80), dans lequel la cartouche de filtration (1) peut être logée dans ladite chambre de filtration (80).

10. Ensemble de filtration (900) selon l'une quelconque des revendications précédentes, dans lequel le dispositif auxiliaire (2) est par exemple un groupe capuchon et/ou un groupe capteur et/ou un groupe de chauffage, et/ou un groupe détecteur et/ou un groupe de commande, qui peut être mis en prise avec la cartouche de filtration (1) pour réaliser les opérations spécifiques auxquelles il est destiné.

11. Ensemble de filtration (900) selon les revendications 9 et 10, dans lequel le dispositif auxiliaire (2) peut également se mettre en prise avec le corps de filtre (8).

12. Ensemble de filtration (900) selon la revendication 11, dans lequel le corps de filtre (8) comprend, le long de l'axe (X-X), une ouverture traversante (89) délimitée par un anneau d'ouverture (890) et le dispositif auxiliaire (2) est positionnable dans l'ouverture traversante (89) comprenant un collier auxiliaire (29) approprié pour venir en prise avec l'anneau d'ouverture (890), dans lequel le dispositif auxiliaire (2) vient en prise de manière étanche avec le corps de filtre (8).

13. Ensemble de filtration (900) selon la revendication 12, dans lequel l'anneau d'ouverture (890) et le collier auxiliaire (29) comprennent des étapes de mise en prise (891, 291) respectivement inclinée par rapport à l'axe (X-X), dans lequel le dégagement entre lesdites étapes impose la direction de rotation du dégagement.

14. Ensemble de filtration (900) selon l'une quelconque des revendications 10 à 13, dans lequel ladite région de logement (52) est formée sur le dispositif auxiliaire (2) faisant face radialement vers l'extérieur, c'est-à-dire faisant face radialement en s'éloignant de l'axe (X-X), c'est-à-dire dans lequel les éléments de cartouche (4) sont externes aux éléments de dispositif (5), ou vice versa, la région de logement (52) est formée sur le dispositif auxiliaire (2) faisant face radialement vers l'intérieur, c'est-à-dire faisant face à l'axe (X-X), c'est-à-dire dans lequel les éléments de cartouche (4) sont internes aux éléments de dispositif (5).

15. Ensemble de filtration (900) selon l'une quelconque des revendications précédentes, dans lequel la cartouche de filtration (1) comprend :
- la plaque d'extrémité (10) ;
- au moins un septum de filtration (11), de préférence de type cylindrique creux, qui peut être traversé radialement par le fluide ;
- une plaque d'extrémité secondaire (12) ;
dans lequel la plaque d'extrémité (10) et la plaque d'extrémité secondaire (12) se trouvent aux extrémités axiales du septum de filtration (11).
